# EUROPÄISCHE PATENTSCHRIFT

(11) **EP 3 617 431 B1**
(45) Veröffentlichungstag und Bekanntmachung des Hinweises auf die Patenterteilung: **08.12.2021**
(21) Anmeldenummer: 19191832.5
(22) Anmeldetag: 14.08.2019
(51) Int. Cl.: E05B 71/00, B62H 5/14, E05B 47/00

(54) **SCHLOSS**
LOCK
SERRURE

(30) Priorität: 30.08.2018 DE 102018121248
(43) Veröffentlichungstag der Anmeldung: 04.03.2020
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- CN-A- 107 120 002
- CN-A- 107 687 297
- CN-U- 205 591 695
- CN-Y- 2 861 417
- CN-Y- 201 100 043
- DE-A1-102016 125 320
- KR-B1- 101 110 416

## Beschreibung

Die vorliegende Erfindung betrifft ein Schloss, insbesondere für ein Zweirad, mit einem Schlosskörper, einem Bügel, der zwischen einer Offenstellung und einer Geschlossenstellung beweglich ist, insbesondere gelagert oder zumindest geführt ist, sowie einem Riegel, der zwischen einer Verriegelungsstellung, in der er den Bügel in dessen Geschlossenstellung gegen ein Verlassen der Geschlossenstellung sperrt, und einer Entriegelungsstellung, in der er den Bügel freigibt, an dem Schlosskörper beweglich gelagert ist. Bei dem Schloss kann es sich insbesondere um ein Rahmenschloss handeln. Der Bügel dient in seiner Geschlossenstellung beispielsweise dazu, einen Gegenstand mittels des Schlosses zu fixieren, z.B. an einem anderen Gegenstand anzuschließen oder eine Bewegung des Gegenstands zu blockieren, etwa nach Art eines Speichenschlosses, das die Drehung eines Rades verhindert. Der Riegel dagegen wirkt typischerweise nicht mit Gegenständen außerhalb des Schlosses, sondern mit dem Bügel zusammen und dient dazu, den Bügel insbesondere in dessen Geschlossenstellung zu sperren bzw. freizugeben, je nachdem, ob das Schloss verriegelt oder entriegelt ist.

Ein derartiges Schloss kann zur Verbesserung des Komforts halbautomatisch oder vollautomatisch ausgebildet sein, indem es zumindest teilweise motorisch antreibbar ist. Das heißt, dass einzelne Elemente des Schlosses von einem oder mehreren Antriebsmotoren des Schlosses motorisch bewegt werden können. In der Regel lässt sich ein solches Schloss zumindest motorisch entriegeln, d.h. dass der Riegel motorisch aus der Verriegelungsstellung in die Entriegelungsstellung versetzbar ist, um den Bügel für ein Verlassen seiner Geschlossenstellung freizugeben. Der Riegel kann aber auch, zusätzlich oder alternativ, in die umgekehrte Richtung motorisch versetzbar sein. Zudem kann vorgesehen sein, dass (auch) der Bügel motorisch bewegt werden kann. Ein Schloss mit diesen Merkmalen ist beispielsweise aus CN 201 100 043 Y bekannt. Um ein motorisch antreibbares Element des Schlosses zuverlässig bewegen zu können, ist es zweckmäßig, Informationen über die jeweils aktuelle Stellung des Elements erfassen zu können. Dazu kann beispielsweise ein Sensor vorgesehen sein. Ein solcher Sensor wird insbesondere zum Erfassen der Riegelstellung genutzt. Sofern der Riegel gewisse Stellungen, wie z.B. die Verriegelungsstellung, nur dann einnehmen kann, wenn sich der Bügel in einer bestimmten Stellung, z.B. in der Geschlossenstellung, befindet, kann mittels des die Riegelstellung erfassenden Sensors indirekt auch die Stellung des Bügels feststellbar sein.

Um anhand des Sensors feststellen zu können, ob der Bügel verriegelt oder freigegeben ist, muss der Sensor zwischen der Verriegelungsstellung und der Entriegelungsstellung des Riegels zuverlässig unterscheiden können. Im Bestreben, das Schloss möglichst kompakt auszubilden, kann aber der Hub des Riegels, d.h. die Länge der zwischen der Verriegelungsstellung und der Entriegelungsstellung vom Riegel zurückzulegenden, in der Regel linearen, Strecke, sehr gering sein, so dass sich die Verriegelungsstellung und die Entriegelungsstellung nicht oder nicht zuverlässig voneinander unterscheiden lassen.

Darüber hinaus muss der Riegel, um den Bügel zu sperren, mit dem Bügel zusammenwirken können. Der Riegel ist daher in der Regel in unmittelbarer Nähe zum Bügel angeordnet, wobei vom Bügel, der mit Gegenständen außerhalb des Schlosses zusammenwirkt, Schmutz von außen auch in den Bereich des Riegels dringen kann. Derartige Verschmutzungen können das Erfassen der Riegelstellung zusätzlich stören und somit erschweren.

Es ist eine Aufgabe der Erfindung, ein insbesondere zumindest teilweise motorisch antreibbares Schloss bereitzustellen, bei dem die Stellungen beweglicher Elemente des Schlosses, insbesondere die jeweilige Stellung des Riegels sowie vorteilhafterweise auch, zumindest indirekt, die Stellung des Bügels, besonders zuverlässig erfasst werden können.

Die Aufgabe wird gelöst durch ein Schloss mit den Merkmalen des Anspruchs 1. Vorteilhafte Ausführungsformen der Erfindung ergeben sich aus den Unteransprüchen, den Figuren sowie der vorliegenden Beschreibung.

Erfindungsgemäß umfasst das Schloss einen beweglich gelagerten Hebel, wobei ein Kopplungsabschnitt des Hebels mit dem Riegel bewegungsgekoppelt ist, wobei der Hebel derart gelagert ist, dass ein von dem Kupplungsabschnitt beabstandeter Auslenkabschnitt des Hebels bei einer Bewegung des Kopplungsabschnitts eine im Vergleich dazu größere Bewegung ausführt, und wobei der Sensor zum Erfassen der Riegelstellung die Stellung des Auslenkabschnitts des Hebels erfasst.

Der Hebel weist also einerseits einen Kopplungsabschnitt und andererseits einen Auslenkabschnitt auf, die separat voneinander angeordnet sind. Über den Kopplungsabschnitt ist der Hebel dabei mit dem Riegel bewegungsgekoppelt, also insbesondere derart gekoppelt, dass eine Bewegung des Riegels zu einer entsprechenden Bewegung des Kopplungsabschnitts führt und/oder umgekehrt. Die Bewegungen können dabei insbesondere insofern einander entsprechend sein, als sich der Riegel und der Kopplungsabschnitt des Hebels zumindest im Wesentlichen um dasselbe Maß bewegen. Dabei können der Riegel und der Kopplungsabschnitt des Hebels aber auch derart gekoppelt sein, dass eine lineare Bewegung des Riegels zu einer Dreh- oder Schwenkbewegung des Hebels führt und/oder umgekehrt. Der Kopplungsabschnitt muss somit nicht zwangsläufig exakt dieselbe Bewegung wie der Riegel ausführen. Vorzugsweise besteht jedoch aufgrund der Bewegungskopplung zumindest ein eindeutiger Zusammenhang zwischen der jeweiligen Stellung des Riegels und der jeweiligen Stellung des Kopplungsabschnitts. Ferner wirken der Kopplungsabschnitt des Hebels und der Riegel vorzugsweise unmittelbar miteinander zusammen, z.B. durch direktes Ineinandergreifen.

Der Auslenkabschnitt des Hebels wird durch denjenigen Abschnitt des Hebels gebildet, dessen Stellung vom Sensor, insbesondere unmittelbar, erfasst wird. Vorzugsweise wirkt der Sensor dazu mit dem Auslenkabschnitt des Hebels direkt zusammen. Die Stellung des Riegels wird auf diese Weise dagegen lediglich indirekt erfasst.

Bei einer Bewegung des Hebels, der vorzugsweise zumindest im Wesentlichen starr ausgebildet ist, bewegt sich aufgrund der Art der Lagerung des Hebels nicht nur der Kopplungsabschnitt, sondern auch der Auslenkabschnitt des Hebels. Das Maß der Bewegung des Auslenkabschnitts ist dabei aber nicht identisch zu dem Maß der Bewegung des Kopplungsabschnitts. Vielmehr erfolgt eine Art Übersetzung, die sich aus der Anordnung des Kopplungsabschnitts und des Auslenkabschnitts relativ zueinander im Zusammenhang mit der Art der Lagerung des Hebels ergibt. Dabei ist die Bewegung des Auslenkabschnitts, die dieser ausführt, wenn sich der Kopplungsabschnitt bewegt, größer als die gleichzeitige Bewegung des Kopplungsabschnitts. Insofern wird die Bewegung des Riegels durch den Hebel also nicht nur vom Kopplungsabschnitt zum Auslenkabschnitt übertragen, sondern dabei zugleich verstärkt.

Sowohl die Übertragung der Bewegung als auch die Verstärkung tragen dabei zu einer Verbesserung der Zuverlässigkeit des Erfassens der Riegelstellung bei. Denn zum einen kann das Erfassen somit in einem Bereich erfolgen, der außerhalb des sogenannten Schmutzbereichs des Riegels liegen und somit besser vor Verschmutzungen geschützt sein kann. Insbesondere kann der Sensor dadurch flexibler innerhalb des Schlosses, beispielsweise zusammen mit anderen empfindlichen elektronischen Komponenten in einem besonders geschützten Bereich des Schlosses, positioniert werden. Zum anderen lassen sich die verschiedenen Stellungen des Riegels infolge der Verstärkung zuverlässiger unterscheiden. Während der Gesamthub des Riegels wenige Millimeter, vorzugsweise weniger als 5 mm, z.B. etwa 4 mm oder weniger, betragen kann, kann vorgesehen sein, dass der entsprechende Hub des Auslenkabschnitts zumindest das Anderthalbfache, vorzugsweise zumindest das Doppelte, des Riegelhubs beträgt. Da idealerweise über den Hebel und die Bewegungskopplung des Hebels mit dem Riegel ein eindeutiger Zusammenhang zwischen der Stellung des Riegels und der Stellung des Auslenkabschnitts besteht (von möglichst geringfügigem Spiel abgesehen), liegen die Stellungen des Auslenkabschnitts, die der Entriegelungsstellung bzw. der Verriegelungsstellung des Riegels entsprechen, aufgrund der vergrößerten Bewegung weiter auseinander als die genannten Riegelstellungen. Dadurch kann sich das Zusammenwirken des Sensors mit dem Auslenkabschnitt in diesen beiden Stellungen stärker unterscheiden und somit zu einer zuverlässigeren Erfassung führen, als wenn der Sensor direkt mit dem Riegel zusammenwirken würde.

Der Hebel kann beispielsweise um einen Drehpunkt schwenkbar gelagert sein. Die Verstärkung zwischen dem Kopplungsabschnitt und dem Auslenkabschnitt ergibt sich dann direkt aus dem Verhältnis der jeweiligen Abstände der beiden Abschnitte vom Drehpunkt. Zudem ist die Verstärkung bei einer solchen schwenkbaren Lagerung konstant. Grundsätzlich kommen aber auch andere Arten der Lagerung in Betracht, darunter auch solche, bei denen die Verstärkung variiert. Abweichungen von einer exakt konstanten Verstärkung können sich zudem auch aus der Art der Bewegungskupplung des Kopplungsabschnitts des Hebels mit dem Riegel ergeben, z.B. wenn die Bewegung des Riegels linear ist, während der Kopplungsabschnitt eines schwenkbaren Hebels eine Teilkreisbahn durchläuft.

Der Drehpunkt kann insbesondere zwischen dem Kopplungsabschnitt und dem Auslenkabschnitt vorgesehen sein. Dies ermöglicht eine vergleichsweise einfache Lagerung des Hebels und Kopplung des Riegels mit dem Hebel. Grundsätzlich können der Kopplungsabschnitt und der Auslenkabschnitt aber auch auf derselben Seite des Drehpunktes angeordnet sein. Auf diese Weise können mit einem vergleichsweise kurzen Hebel vergleichsweise große Verstärkungen des jeweiligen Ausmaßes der Bewegung zwischen dem Kopplungsabschnitt und dem Auslenkabschnitt erzielt werden, was besonders kompakte Ausführungsformen ermöglicht.

Der Hebel kann beispielsweise zumindest im Wesentlichen stabförmig sein. Insbesondere in diesem Fall können der Kopplungsabschnitt, der Auslenkabschnitt und der Drehpunkt auf einer geraden Linie liegen, die der Längserstreckung des Hebels entsprechen kann. Des Weiteren kann der Kopplungsabschnitt an einem ersten Ende des Hebels und kann der Auslenkabschnitt an einem dem ersten Ende entgegengesetzten zweiten Ende des Hebels vorgesehen sein. Die Enden des Hebels sind dabei insbesondere Enden bezüglich der genannten Längserstreckung des Hebels.

Gemäß einer vorteilhaften Ausführungsform ist der Bügel zumindest teilweise innerhalb des Schlosskörpers angeordnet, wobei der Riegel sowie der Hebel vollständig innerhalb des Schlosskörpers angeordnet sind. Denn während der Bügel mit Gegenständen außerhalb des Schlosses zusammenwirken muss, ist es insbesondere im Hinblick auf die Sicherheit des Schlosses vorteilhaft, wenn der Riegel und der Hebel von außen nicht zugänglich sind. Der Hebel ermöglicht dabei eine flexible Positionierung des Sensors, der ebenfalls vorteilhafterweise in dem Schloss angeordnet sowie von außen nicht zugänglich ist und aufgrund des Hebels nicht auf eine Anordnung in der Nähe des Riegels beschränkt ist. Durch diese Anordnung des Hebels und/oder des Sensors kann die Stellungserfassung außerhalb des Schmutzbereichs des Riegels sowie insbesondere auch in einem verkapselten oder auf andere Weise besonders gesicherten Bereich des Schlosskörpers erfolgen.

Des Weiteren ist es bevorzugt, dass der Auslenkabschnitt mit dem Sensor magnetisch zusammenwirkt. Auf diese Weise kann das Erfassen der Stellung des Auslenkabschnitts mittels des Sensors vorteilhafterweise kontaktlos erfolgen. Das ermöglicht es, den Sensor ebenso wie weitere Elektronik des Schlosses gegenüber mechanischen Elementen, wie insbesondere dem Hebel und dem Riegel, räumlich isoliert anzuordnen.

Beispielsweise kann der Sensor als magnetischer Sensor ausgebildet sehr, der mit einem Permanentmagneten zusammenwirkt, den der Auslenkabschnitt aufweist. Insbesondere kann der Auslenkabschnitt zumindest im Wesentlichen durch den Permanentmagneten definiert sein. Grundsätzlich kann der Sensor beispielsweise als einfacher Magnetschalter ausgebildet sein. Vorzugsweise ist der Sensor aber als Hall-Sensor oder Magnetfeldsensor ausgebildet. Besonders vorteilhaft ist es dabei, wenn der Sensor zur dreidimensionalen magnetischen Erfassung ausgebildet ist. Das heißt beispielsweise, dass es möglich ist, mittels des Sensors die Position eines Permanentmagneten im Raum zu bestimmen, oder dass sich mittels des Sensors nicht nur die Stärke eines Magnetfeldes, sondern auch dessen räumliche Ausrichtung bestimmen lässt. Auf diese Weise können auch mehr als zwei Zustände mittels eines einzelnen Sensors unterschieden und unter Umständen ganze Bewegungsbahnen nachvollzogen werden.

Das magnetische Zusammenwirken des Auslenkabschnitts mit dem Sensor ermöglicht ferner eine Ausführungsform, bei der das Schloss ein innerhalb des Schlosskörpers angeordnetes, vorzugsweise vollumfänglich geschlossenes, Innengehäuse umfasst, wobei der Sensor innerhalb des Innengehäuses angeordnet ist und der Hebel außerhalb des Innengehäuses angeordnet ist. Der Auslenkabschnitt und der Sensor wirken dabei also durch das Innengehäuse hindurch magnetisch zusammen. Auf diese Weise kann der Sensor gegebenenfalls mit sonstiger Elektronik und/oder sonstigen besonders zu schützenden Komponenten des Schlosses durch das Innengehäuse gegenüber den übrigen Komponenten des Schlosses eingekapselt sein. Das Innengehäuse ist dabei vorteilhafterweise nicht magnetisch und vorzugsweise gegenüber einem äußeren Gehäuse des Schlosses verstärkt ausgebildet, z.B. aus einem gehärteten Material, insbesondere aus gehärtetem Metall.

Gemäß einer weiteren vorteilhaften Ausführungsform ist der Hebel derart gelagert, dass er einen einzigen Freiheitsgrad aufweist. Dies ist insbesondere zweckmäßig, wenn auch der Riegel lediglich einen Freiheitsgrad aufweist. Wenn nur ein Freiheitsgrad vorliegt, kann der Hebel nur entlang einer definierten Bewegungsbahn, allerdings in zwei entgegengesetzte Richtungen, bewegt werden. Insbesondere durch eine derart eingeschränkte Beweglichkeit können vom Sensor erfasste Messwerte speziell im Hinblick darauf unterschieden werden, ob sie sich einer möglichen Stellung des Auslenkabschnitts, d.h. insbesondere einer Stellung entlang der definierten Bewegungsbahn des Auslenkabschnitts, zuordnen lassen oder nicht. Ist eine Zuordnung nicht möglich, kann der erfasste Messwert als Hinweis auf einen Manipulationsversuch an dem Schloss zu werten sein, bei dem der Hebel von seiner üblichen Bewegungsbahn abgebracht wird oder bei dem versucht wird, mittels externer Magnetfelder auf das Schloss einzuwirken. Im Zusammenhang mit einer derartigen Detektion von Manipulationsversuchen sind insbesondere die genannten zur dreidimensionalen magnetischen Erfassung ausgebildeten Sensoren vorteilhaft, da sie differenziertere Informationen bereitstellen als magnetische Sensoren, die lediglich den Abstand eines Magneten vom Sensor oder lediglich den Absolutbetrag der Stärke eines Magnetfeldes erfassen.

Gemäß einer weiteren vorteilhaften Ausführungsform umfasst das Schloss einen Antriebsmotor zum Bewegen des Riegels. Der Antriebsmotor kann zudem auch zum Bewegen des Bügels vorgesehen sein. Das Schloss kann auch zusätzlich zu dem genannten Antriebsmotor einen oder mehrere weitere Antriebsmotoren zum Bewegen des Bügels und/oder weiterer beweglicher Elemente des Schlosses aufweisen.

Wenn in dem Schoss ein Antriebsmotor zum Bewegen des Riegels vorgesehen ist, ist der Hebel vorzugsweise im Wesentlichen parallel zum Antriebsmotor ausgerichtet. Dabei ist insbesondere eine Längserstreckung des Hebels, z.B. eine Verbindungslinie zwischen dem Kopplungsabschnitt und dem Auslenkabschnitt des Hebels, parallel zu einer Rotationsachse einer Abtriebswelle des Antriebsmotors und/oder zu einer Längserstreckung des Antriebsmotors angeordnet. Insbesondere kann der Hebel im Rahmen seiner Beweglichkeit zumindest eine Stellung einnehmen, die einer Stellung des Riegels auf dessen Bewegungsbahn zwischen der Verriegelungsstellung und der Entriegelungsstellung entspricht und in der der Hebel parallel zum Antriebsmotor ausgerichtet ist.

Dabei ist der Kopplungsabschnitt des Hebels vorzugsweise im Bereich einer Abtriebswelle des Antriebsmotors angeordnet und der Auslenkabschnitt des Hebels im Bereich elektrischer Anschlüsse des Antriebsmotors angeordnet. Denn auf diese Weise können die Abtriebswelle des Antriebsmotors bzw. ein die Abtriebswelle mit dem Riegel antriebswirksam verbindendes Übertragungselement sowie der Kopplungsabschnitt des Hebels auf der einen Seite mit dem Riegel zusammenwirken und die Anschlüsse des Antriebsmotors sowie der Auslenkabschnitt des Hebels auf der anderen Seite mit dem Sensor bzw. sonstigen elektronischen Komponenten, z.B. einer Auswerte- und Steuereinheit, die auch mit dem Sensor verbunden ist, zusammenwirken, ohne dass dafür größere räumliche Distanzen zu überwinden wären.

Gemäß einer weiteren vorteilhaften Ausführungsform weist der Bügel eine erste Eingriffsvertiefung auf, in die der Riegel, wenn der Bügel in der Geschlossenstellung ist, eingreifen kann, um den Bügel gegen ein Verlassen der Geschlossenstellung zu sperren. Vorzugsweise weist der Bügel ferner eine zweite Eingriffsvertiefung auf, in die der Riegel, wenn der Bügel in der Offenstellung ist, eingreifen kann, um den Bügel gegen ein Verlassen der Offenstellung zu sperren. Bei einer solchen Ausführungsform kann also zusätzlich zur Geschlossenstellung auch die Offenstellung durch den Riegel gesichert werden. Das ist beispielsweise bei automatischen Rahmenschlössern vorteilhaft, bei denen es wichtig ist sicherzustellen, dass sich Bügel nicht versehentlich, vor allem nicht während der Fahrt, schließt. Die Stellung, die der Riegel einnimmt, wenn er vollständig in die erste Eingriffsvertiefung des Bügels eingreift, entspricht insbesondere der genannten Verriegelungsstellung. Die Stellung, die der Riegel einnimmt, wenn er vollständig in die zweite Eingriffsvertiefung des Bügels eingreift, könnte grundsätzlich ebenfalls der Verriegelungsstellung entsprechen. Im Rahmen der Erfindung handelt es sich jedoch um eine sowohl von der Verriegelungsstellung als auch von der Entriegelungsstellung des Riegels verschiedene Sicherungsstellung des Riegels, wie nachstehend erläutert wird.

Erfindungsgemäß ist der Riegel gegen den Bügel vorgespannt, so dass er an einer Kontur des Bügels anliegt, zumindest solange er nicht entgegen der Vorspannung, z.B. durch einen Antriebsmotor des Schlosses, bewegt oder gehalten wird. Bei einer Bewegung des Bügels kann der Riegel dabei an der Kontur, zumindest an Bereichen der Kontur, die keine stufenartigen Sprünge aufweisen, entlanggleiten. Dabei ist die Kontur des Bügels derart ausgebildet, dass der Riegel infolge der Vorspannung, in der Geschlossenstellung des Bügels seine Verriegelungsstellung einnimmt, in Stellungen des Bügels, die zwischen der Geschlossenstellung und der Offenstellung des Bügels liegen, seine Entriegelungsstellung einnimmt und in der Offenstellung des Bügels eine von der Verriegelungsstellung und der Entriegelungsstellung verschiedene Sicherungsstellung einnimmt. Vorzugsweise liegt die Sicherungsstellung entlang der Beweglichkeit des Riegels zwischen dessen Vierregelungsstellung und dessen Entriegelungsstellung.

Des Weiteren kann bei einer solchen Ausführungsform vorgesehen sein, dass die Kontur des Bügels die genannte erste Eingriffsvertiefung und die genannte zweite Eingriffsvertiefung aufweist, so dass der Riegel infolge der Vorspannung in der Geschlossenstellung des Bügels in die erste Eingriffsvertiefung eingreift, wobei durch die Tiefe des Eingreifens die Verriegelungsstellung des Riegels definiert wird, und in der Offenstellung des Bügels in die zweite Eingriffsvertiefung eingreift, wobei durch die Tiefe des Eingreifens die Sicherungsstellung des Riegels definiert wird.

Die gegenüber der Bewegung des Riegels verstärkte Bewegung des mit dem Sensor zusammenwirkenden Auslenkabschnitts des Hebels ist insbesondere aufgrund der zusätzlich zu der Verriegelungsstellung und der Entriegelungsstellung des Riegels definierten Sicherungsstellung des Riegels vorteilhaft, derentwegen zumindest drei verschiedene Stellungen zu unterscheiden sind. Denn je mehr Riegelstellungen zu unterscheiden sind, desto schwieriger ist deren Unterscheidung, insbesondere bei einem Riegel mit geringem Gesamthub. Indem die Riegelstellung nicht direkt erfasst wird, sondern anhand der Stellung des Auslenkabschnitts des mit dem Riegel bewegungsgekoppelten Hebels, lassen sich jedoch auch mehr als zwei Stellungen des Riegels zuverlässig zu unterscheiden.

Erfindungsgemäß ausgebildete Schlösser, bei denen der Riegel gegen eine Kontur des Bügels vorgespannt ist, ermöglichen zudem, anhand der (über den Auslenkabschnitt des Hebels) erfassten Riegelstellung auch die Stellung des Bügels zu ermitteln. Denn aufgrund der Vorspannung wird, solange der Riegel nicht entgegen der Vorspannung bewegt oder gehalten wird, die Stellung des Riegels dadurch bestimmt, an welcher Stelle der Kontur des Bügels der Riegel gerade anliegt, was wiederum von der Stellung des Bügels abhängt. Dabei kann die Kontur insbesondere zumindest drei verschiedene Niveaus aufweisen, die somit zu einer entsprechenden Anzahl von Riegelstellungen führen und derart angeordnet sind, dass: der Riegel in der Geschlossenstellung des Bügels auf Höhe eines ersten Niveaus an der Kontur anliegt, das insbesondere der genannten ersten Eingriffsvertiefung entsprechen kann, und dadurch seine Verriegelungsstellung einnimmt; in der Offenstellung der Bügels auf Höhe eines zweiten Niveaus an der Kontur anliegt, das insbesondere der genannten zweiten Eingriffsvertiefung entsprechend kann, und dadurch seine Sicherungsstellung einnimmt; und in Stellungen des Bügels zwischen der Geschlossenstellung und der Offenstellung auf Höhe eines dritten Niveaus an der Kontur anliegt. Die diesem dritten Niveau entsprechende Stellung des Riegels kann dann als Hinweis darauf gewertet werden, dass der Bügel sich gerade irgendwo zwischen der Geschlossenstellung und der Offenstellung befindet, insbesondere gerade bewegt, zumal der Riegel den Bügel in dieser Stellung vorteilhafterweise nicht sperrt. Insofern entspricht diese Riegelstellung der Entriegelungsstellung des Riegels. Dabei muss die Entriegelungsstellung des Riegels nicht zwangsläufig auf eine einzige Riegelstellung festgelegt sein, sondern kann auch einen Bereich von Riegelstellungen umfassen, nämlich insbesondere all diejenigen Stellungen, in denen der Bügel durch den Riegel für eine Bewegung aus der Geschlossenstellung in die Offenstellung und/oder umgekehrt freigegeben ist. Insbesondere kann insofern auch eine (oder jede) Stellung, in die der Riegel entgegen der Vorspannung so weit motorisch verstellt wird, dass er über das oberste Niveau der Kontur des Bügels hinaus versetzt ist und somit zwangsläufig den Bügel freigibt, der Entriegelungsstellung des Riegels entsprechen.

Die Erfindung wird nachfolgend lediglich beispielhaft unter Bezugnahme auf die Figuren weiter erläutert.
- Fig. 1: zeigt in einer perspektivischen schematischen Darstellung Teile einer Ausführungsform des erfindungsgemäßen Schlosses, wobei sich der Bügel in der Geschlossenstellung befindet und sich der Riegel in der Verriegelungsstellung befindet.
- Fig. 2: zeigt dieselbe Ausführungsform mit denselben Stellungen wie in Fig. 1, jedoch aus einem anderen Blickwinkel.
- Fig. 3: entspricht weitgehend der Fig. 2, wobei jedoch der Bügel eine Zwischenstellung einnimmt und sich der Riegel in der Entriegelungsstellung befindet.
- Fig. 4: entspricht weitgehend der Fig. 2, wobei sich jedoch der Bügel in der Offenstellung befindet und sich der Riegel in der Sicherungsstellung befindet.
- Fig. 5: zeigt dieselbe Ausführungsform wie in Fig. 1 bis 4 in einer perspektivischen schematischen Ausschnittsdarstellung, wobei teilweise andere Teile des Schlosses dargestellt sind als in Fig. 1 bis 4.

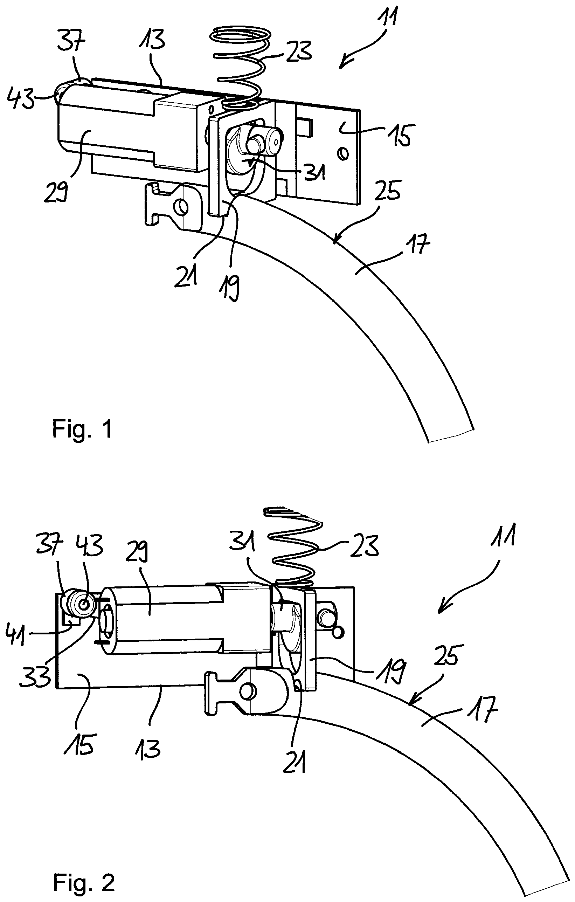

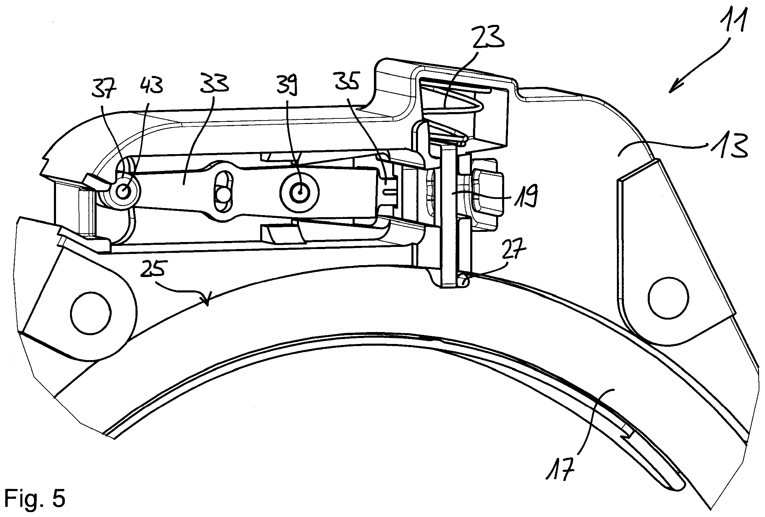

Die Fig. 1 bis 5 zeigen eine Ausführungsform eines erfindungsgemäßen Schlosses. Bei dieser Ausführungsform handelt es sich um ein teilautomatisches Rahmenschloss 11, das insbesondere für Zweiräder gedacht ist. Das Rahmenschloss 11 umfasst einen Schlosskörper 13, von dem in den Fig. 1 bis 4 lediglich eine einen Innenraum des Schlosskörpers 13 begrenzende Platte 15, in Fig. 5 jedoch ausschnittsweise weitere Elemente gezeigt sind.

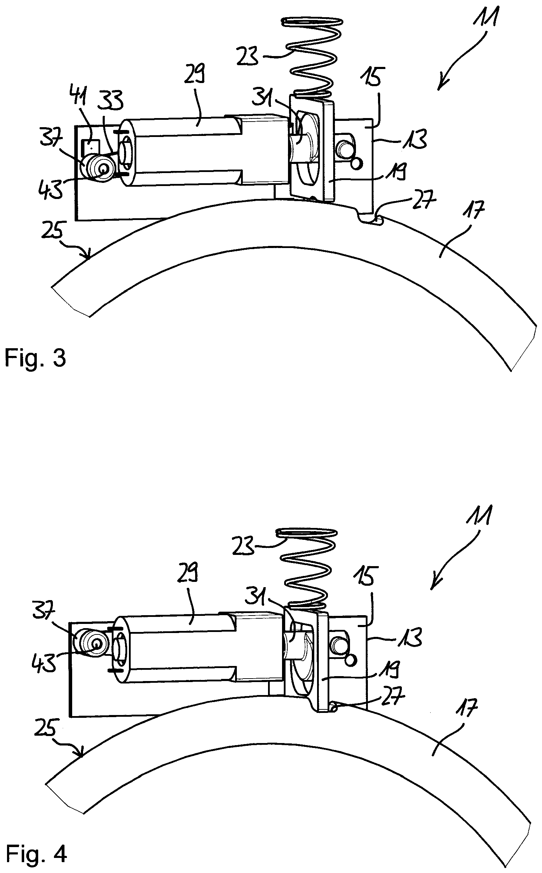

Das Rahmenschloss 11 umfasst ferner einen teilkreisbogenförmigen Bügel 17, der jeweils nur teilweise gezeigt ist und der zwischen der in den Fig. 1 und 2 gezeigten Geschlossenstellung und der in den Fig. 4 und 5 gezeigten Offenstellung beweglich ist. In dem in Fig. 3 gezeigten Zustand des Schlosses befindet sich der Bügel 17 in einer Zwischenstellung zwischen der Geschlossenstellung und der Offenstellung. Der Bügel 17 wird durch den Schlosskörper 13 auf einer Kreisbahn geführt, entlang der sich auch die Teilkreisbogenform des Bügels 17 erstreckt. Das Rahmenschloss 11 ist dazu ausgebildet, derart an einem Rad eines Zweirades angeordnet zu werden, dass der Bügel 17 in der Geschlossenstellung zwischen Speichen des Rades greift und es dadurch blockiert, in der Offenstellung dagegen das Rad freigibt. Dabei kann der Bügel 17 in die Offenstellung vorgespannt sein.

Die grundsätzliche Beweglichkeit des Bügels 17 wird durch einen Riegel 19 des Schlosses 11 eingeschränkt, der im Wesentlichen radial zur Teilkreisbogenform des Bügels 17 beweglich an dem Schlosskörper 13 gelagert ist. Dabei kann der Riegel 19, wenn sich der Bügel 17 in seiner Geschlossenstellung befindet, in eine erste Eingriffsvertiefung 21 des Bügels 17 eingreifen, die sich radial von außen in den Bügel 17 erstreckt. In diesem Zustand, der in den Fig. 1 und 2 gezeigt ist, sperrt der Riegel 19 durch das Eingreifen in die erste Eingriffsvertiefung 21 den Bügel 17 gegen ein Verlassen der Geschlossenstellung und befindet sich insofern in seiner Verriegelungsstellung.

Aus dieser Verriegelungsstellung kann der Riegel 19 radial nach außen versetzt werden, so dass er aus der ersten Eingriffsvertiefung 21 austritt und radial außerhalb des Außenradius des Bügels 17 angeordnet ist. Dadurch wird der Bügel 17 für ein Verlassen der Geschlossenstellung freigegeben, so dass sich der Riegel 19 insofern in seiner Entriegelungsstellung befindet. Die Entriegelungsstellung ist dabei nicht unbedingt auf eine einzige Stellung des Riegels 19 beschränkt, sondern kann den gesamten Bereich von Riegelstellungen umfassen, in denen der Bügel 17 für ein Bewegen von der Geschlossenstellung in die Offenstellung und zurück freigegeben ist. Die Entriegelungsstellung des Riegels 19 ist beispielsweise in Fig. 3 gezeigt.

Des Weiteren umfasst das Schloss eine Feder 23, die den Riegel 19 beaufschlagt und dadurch gegen den Bügel 17 vorspannt. Solange der Riegel 19 nicht entgegen dieser Vorspannung bewegt oder gehalten wird, liegt der Riegel 19 daher an einer äußeren Kontur 25 des Bügels 17 an. Wo entlang dieser Kontur 25 der Riegel 19 jeweils anliegt, hängt dabei von der jeweiligen Stellung des Bügels 17 ab.

Die erste Eingriffsvertiefung 21 bildet dabei denjenigen Teil der Kontur 25, gegen den der Riegel 19 in der Geschlossenstellung des Bügels 17 anliegt. In einem Bereich, der sich an die erste Eingriffsvertiefung 21 anschließt, weist die Kontur 25 einen im Wesentlichen konstanten Radius auf, der dem Außenradius des Bügels 17 entspricht. An diesem Bereich liegt der Riegel 19 in Zwischenstellungen des Bügels 17 zwischen dessen Geschlossenstellung und Offenstellung aufgrund der Vorspannung an und nimmt dadurch im Wesentlichen die in Fig. 3 gezeigte Entriegelungsstellung ein. In der Entriegelungsstellung des Riegels 19 kann der Bügel 17 geöffnet oder geschlossen werden, wobei der Riegel 19, solange er nicht wie in Fig. 3 gezeigt durch den Exzenter 31 entgegen der Vorspannung der Feder 23 in einem Abstand zur Kontur 25 gehalten wird, an der Kontur 25 des Bügels 17 entlanggleitet.

Die Kontur 25 erstreckt sich von der ersten Eingriffsvertiefung 21 über den Bereich mit konstantem Radius bis zu einer zweiten Eingriffsvertiefung 27, die sich radial von außen in den Bügel 17 erstreckt und in die der Riegel 19 aufgrund der Vorspannung der Feder 23 eingreift, wenn sich der Bügel 17 in der Offenstellung befindet. Gegenüber dem Bereich der Kontur 25 mit konstantem Radius weist die zweite Eingriffsvertiefung 27 eine geringere Tiefe auf als die erste Eingriffsvertiefung 21. Dadurch unterscheidet sich die in den Fig. 4 und 5 gezeigte Stellung des in die zweite Eingriffsvertiefung 27 eingreifenden Riegels 19 von der Verriegelungsstellung, in der er sich befindet, wenn er in die erste Eingriffsvertiefung 21 eingreift. Durch das Eingreifen des Riegels 19 in die zweite Eingriffsvertiefung 27 wird der Bügel 17 an einem Verlassen seiner Öffnungsstellung gehindert, so dass der Bügel 17 gegen ein Schließen gesichert ist. Die in den Fig. 4 und 5 gezeigte Riegelstellung stellt insofern eine von der Verriegelungsstellung und der Entriegelungsstellung zu unterscheidende Sicherungsstellung des Riegels 19 dar.

Entgegen der Vorspannung der Feder 23 kann der Riegel 19 bezüglich der Teilkreisbogenform des Bügels 17 radial nach außen motorisch versetzt werden. Dazu ist ein Antriebsmotor 29 vorgesehen, der bei der gezeigten beispielhaften Ausführungsform als Elektromotor ausgebildet ist. Eine Abtriebswelle des Antriebsmotors 29 treibt einen Exzenter 31 an, der in eine Öffnung des im Wesentlichen scheibenförmigen Riegels 19 eingreift, so dass der Riegel 19 je nach Drehstellung des Exzenters 31 gegen die Vorspannung radial nach außen versetzt und grundsätzlich auch in einer bestimmten Stellung gehalten werden kann. Der Antriebsmotor 29 wird jedoch lediglich dazu genutzt, den Bügel 17 für ein Verlassen der Geschlossenstellung (Fig. 1 und 2) bzw. der Offenstellung (Fig. 4 und 5) freizugeben, indem der Riegel 19 kurzzeitig aus seiner Verriegelungsstellung (Fig. 1 und 2) bzw. seiner Sicherungsstellung (Fig. 4 und 5) radial nach außen versetzt wird, so dass der Eingriff des Riegels 19 in die erste Eingriffsvertiefung 21 bzw. in die zweite Eingriffsvertiefung 27 aufgehoben wird. Sobald sich der Bügel 17 daraufhin aus der Geschlossenstellung bzw. Offenstellung bewegt hat, kann der Antriebsmotor 29 deaktiviert werden, so dass der Riegel 19 wieder durch die Vorspannung der Feder 23 gegen den Bügel 17 gedrängt wird und an dem Bereich der Kontur 25 mit konstantem Radius anliegt. Der Bügel 17 ist dadurch für ein Bewegen zwischen seiner Geschlossenstellung und seiner Offenstellung freigegeben.

Da der Riegel 19 infolge der Vorspannung an der Kontur 25 anliegt, solange er nicht vorübergehend entgegen der Vorspannung versetzt oder gehalten wird, lässt sich anhand der jeweiligen Stellung des Riegels 19 auch der Zustand des Bügels 17 feststellen. Befindet sich der Riegel 19 in der Verriegelungsstellung, kann der Bügel 17 nur in der Geschlossenstellung sein. In entsprechender Weise kann der Bügel 17 nur in der Offenstellung sein, wenn sich der Riegel 19 in der Sicherungsstellung befindet. Befindet sich der Riegel 19 dagegen in der Entriegelungsstellung, insbesondere in der Stellung, in der er an dem Bereich der Kontur 25 mit konstantem Radius anliegt, so befindet sich der Bügel 17 in einer Zwischenstellung zwischen der Offenstellung und der Geschlossenstellung. Voraussetzung dafür, dass sich diese Information erfassen lässt, ist aber, dass sich die Verriegelungsstellung, die Sicherungsstellung und die Entriegelungsstellung zuverlässig unterscheiden lassen, obwohl der Hub des Riegels 19, der insbesondere durch den Abstand der in den Fig. 1 und 2 gezeigten Verriegelungsstellung von der in Fig. 3 gezeigten Entriegelungsstellung definiert wird, unter Umständen sehr gering ist, im vorliegenden Beispiel etwa lediglich 4 mm beträgt.

Für eine dennoch zuverlässige Erfassung der Riegelstellung ist innerhalb des Schlosskörpers 13 ein Hebel 33 vorgesehen, der im Wesentlichen parallel zum Antriebsmotor 29 angeordnet ist und in den Fig. 1 bis 4 größtenteils vom Antriebsmotor 29 verdeckt wird. In Fig. 5 ist der Hebel 33 dagegen nahezu vollständig zu sehen, da der Antriebsmotor 29 sowie der Exzenter 31 in Fig. 5 ausgeblendet sind. Der Hebel 33 ist als flacher gerader Stab ausgebildet, der sich von einem Kopplungsabschnitt 35 bis zu einem Auslenkabschnitt 37 erstreckt. Dabei ist der Hebel 33 um einen Drehpunkt 39 schwenkbar an dem Schlosskörper 13 gelagert. Die Riegel 19 ist dabei im Wesentlichen tangential zu der durch den Drehpunkt 39 definierten Schwenkachse des Hebels 33 beweglich angeordnet. Über den Kopplungsabschnitt 35 ist der Hebel 33 mit dem Riegel 19 bewegungsgekoppelt, so dass bei einem Versetzen des Riegels 19 der Hebel 33 um den Drehpunkt 39 verschwenkt wird. Die Bewegungskopplung des Hebels 33 mit dem Riegel 19 erfolgt dabei dadurch, dass der Kopplungsabschnitt 35 in eine Aussparung des Riegels 19 eingreift.

Da der Kopplungsabschnitt 35 an einem ersten Ende des Hebels 33 vorgesehen ist und der Auslenkabschnitt 37 an einem dem ersten Enden entgegengesetzten zweiten Ende des Hebels 33 in etwa doppelt so großem Abstand von dem Drehpunkt 39 vorgesehen ist wie der Kopplungsabschnitt 35, führt der Auslenkabschnitt 37 bei einer Bewegung des Kopplungsabschnitts 35 eine im Vergleich dazu etwa doppelt so große Bewegung aus. Auf diese Weise unterscheiden sich die drei der Verriegelungsstellung, der Entriegelungsstellung und der Sicherungsstellung des Riegels 19 entsprechenden Stellungen des Auslenkabschnitts 37 stärker voneinander als diese Riegelstellungen selbst. Mittels eines Sensors 41 (vgl. Fig. 2 und 3), der benachbart zum Auslenkabschnitt 37 des Hebels 33 angeordnet ist und die Stellung des Auslenkabschnitts 37 erfasst, lassen sich die Riegelstellungen daher zuverlässiger unterscheiden, als wenn sie direkt anhand des Riegels 19 erfasst würden. Zudem kann der Sensor 41 auf diese Weise außerhalb des Schmutzbereichs des Riegels 19 und stattdessen in der Nähe einer unter anderem auch zur Ansteuerung des Antriebsmotors 29 vorgesehenen Elektronik (nicht dargestellt) angeordnet werden.

Bei dem Sensor 41 handelt es sich um einen magnetischen Sensor nach Art eines Hall-Sensors oder Magnetfeldsensors, der insbesondere zur dreidimensionalen magnetischen Erfassung ausgebildet ist. Der Sensor 41 wirkt dabei mit einem am Auslenkabschnitt 37 des Hebels 33 angeordneten Permanentmagneten 43 zusammen, dessen Magnetfeld der Sensor 41 erfasst. Die Ausbildung des Sensors 41 als 3D-Sensor ermöglicht es dabei, mittels eines einzigen Sensors 41 zumindest die drei Stellungen des Auslenkabschnitts 37 des Hebels 33 zuverlässig zu unterscheiden, die aufgrund der Bewegungskopplung des Riegels 19 mit dem Kopplungsabschnitt 35 des Hebels 33 der Verriegelungsstellung, der Entriegelungsstellung und der Sicherungsstellung des Riegels 19 entsprechen.

### Bezugszeichen

- 11: Rahmenschloss
- 13: Schlosskörper
- 15: Platte
- 17: Bügel
- 19: Riegel
- 21: erste Eingriffsvertiefung
- 23: Feder
- 25: Kontur
- 27: zweite Eingriffsvertiefung
- 29: Antriebsmotor
- 31: Exzenter
- 33: Hebel
- 35: Kopplungsabschnitt
- 37: Auslenkabschnitt
- 39: Drehpunkt
- 41: Sensor
- 43: Permanentmagnet

## Patentansprüche

1. Schloss (11), insbesondere für ein Zweirad, vorzugsweise zumindest teilweise motorisch antreibbar, mit
- einem Schlosskörper (13),
- einem Bügel (17), der zwischen einer Offenstellung und einer Geschlossenstellung beweglich ist,
- einem Riegel (19), der zwischen einer Verriegelungsstellung, in der er den Bügel (17) in dessen Geschlossenstellung gegen ein Verlassen der Geschlossenstellung sperrt, und einer Entriegelungsstellung, in der er den Bügel (17) freigibt, an dem Schlosskörper (13) beweglich gelagert ist,
- einem Sensor (41) zum Erfassen der Riegelstellung, sowie
- einem beweglich gelagerten Hebel (33),
wobei ein Kopplungsabschnitt (35) des Hebels (33) mit dem Riegel (19) bewegungsgekoppelt ist,
wobei der Hebel (33) derart gelagert ist, dass ein von dem Kopplungsabschnitt (35) beabstandeter Auslenkabschnitt (37) des Hebels (33) bei einer Bewegung des Kopplungsabschnitts (35) eine im Vergleich dazu größere Bewegung ausführt,
wobei der Sensor (41) zum Erfassen der Riegelstellung die Stellung des Auslenkabschnitts (37) des Hebels (33) erfasst,
wobei
der Riegel (19) gegen den Bügel (17) vorgespannt ist, so dass er an einer Kontur (25) des Bügels (17) anliegt,
wobei
die Kontur (25) des Bügels (17) derart ausgebildet ist, dass der Riegel (19) infolge der Vorspannung
- in der Geschlossenstellung des Bügels (17) seine Verriegelungsstellung einnimmt,
- in Stellungen des Bügels (17), die zwischen der Geschlossenstellung und der Offenstellung des Bügels (17) liegen, seine Entriegelungsstellung einnimmt und
- in der Offenstellung des Bügels (17) eine von der Verriegelungsstellung und der Entriegelungsstellung verschiedene Sicherungsstellung einnimmt, die vorzugsweise zwischen der Verriegelungsstellung und der Entriegelungsstellung liegt,
und wobei mittels des Sensors (41) zumindest die drei Stellungen des Auslenkabschnitts (37) des Hebels (33) zuverlässig zu unterscheiden sind, die der Verriegelungsstellung, der Entriegelungsstellung und der Sicherungsstellung des Riegels (19) entsprechen.

2. Schloss nach Anspruch 1,
wobei der Hebel (33) um einen Drehpunkt (39) schwenkbar gelagert ist.

3. Schloss nach Anspruch 2,
wobei der Drehpunkt (39) zwischen dem Kopplungsabschnitt (35) und dem Auslenkabschnitt (37) vorgesehen ist.

4. Schloss nach zumindest einem der vorstehenden Ansprüche,
wobei der Kopplungsabschnitt (35) an einem ersten Ende des Hebels (33) und der Auslenkabschnitt (37) an einem dem ersten Ende entgegengesetzten zweiten Ende des Hebels (33) vorgesehen ist.

5. Schloss nach zumindest einem der vorstehenden Ansprüche,
wobei der Bügel (17) zumindest teilweise innerhalb des Schlosskörpers (13) angeordnet ist, und der Riegel (19) sowie der Hebel (33) vollständig innerhalb des Schlosskörpers (13) angeordnet sind.

6. Schloss nach zumindest einem der vorstehenden Ansprüche,
wobei der Auslenkabschnitt (37) mit dem Sensor (41) magnetisch zusammenwirkt.

7. Schloss nach Anspruch 6,
wobei der Auslenkabschnitt (37) einen Permanentmagneten (43) aufweist und der Sensor (41) als magnetischer Sensor, insbesondere Hall-Sensor oder Magnetfeldsensor ausgebildet ist,
wobei der Sensor (41) vorzugsweise zur dreidimensionalen magnetischen Erfassung ausgebildet ist.

8. Schloss nach Anspruch 6 oder 7,
wobei das Schloss ein innerhalb des Schlosskörpers (13) angeordnetes, vorzugsweise vollumfänglich geschlossenes, Innengehäuse umfasst, wobei der Sensor (41) innerhalb des Innengehäuses angeordnet ist und der Hebel (33) außerhalb des Innengehäuses angeordnet ist.

9. Schloss nach zumindest einem der vorstehenden Ansprüche, wobei der Hebel (33) derart gelagert ist, dass er einen einzigen Freiheitsgrad aufweist.

10. Schloss nach zumindest einem der vorstehenden Ansprüche, wobei das Schloss einen Antriebsmotor (29) zum Bewegen des Riegels (19) umfasst.

11. Schloss nach Anspruch 10,
wobei der Hebel (33) im Wesentlichen parallel zum Antriebsmotor (29) ausgerichtet ist.

12. Schloss nach zumindest einem der vorstehenden Ansprüche,
wobei der Bügel (17) eine erste Eingriffsvertiefung (21) aufweist, in die der Riegel (19), wenn der Bügel (17) in der Geschlossenstellung ist, eingreifen kann, um den Bügel (17) gegen ein Verlassen der Geschlossenstellung zu sperren.

13. Schloss nach Anspruch 12,
wobei der Bügel (17) eine zweite Eingriffsvertiefung (27) aufweist, in die der Riegel (19), wenn der Bügel (17) in der Offenstellung ist, eingreifen kann, um den Bügel (17) gegen ein Verlassen der Offenstellung zu sperren.

14. Schloss nach Anspruch 13,
wobei die Kontur (25) des Bügels (17) die erste Eingriffsvertiefung (21) und die zweite Eingriffsvertiefung (27) aufweist, so dass der Riegel (19) infolge der Vorspannung
- in der Geschlossenstellung des Bügels (17) in die erste Eingriffsvertiefung (21) eingreift, wobei durch die Tiefe des Eingreifens die Verriegelungsstellung des Riegels (19) definiert wird, und
- in der Offenstellung des Bügels (17) in die zweite Eingriffsvertiefung (27) eingreift, wobei durch die Tiefe des Eingreifens die Sicherungsstellung des Riegels (19) definiert wird.

## Claims

1. A lock (11), in particular for a two-wheeler, preferably at least partly drivable in a motorized manner, comprising
- a lock body (13);
- a hoop (17) which is movable between an open position and a closed position;
- a latch (19) which is movably supported at the lock body (13) between a locked position in which it blocks the hoop (17), while the hoop (17) is in the closed position, against a departure from the closed position, and an unlocked position in which it releases the hoop (17);
- a sensor (41) for detecting the latch position; and
- a movably supported lever (33),
wherein a coupling section (35) of the lever (33) is movement-coupled to the latch (19);
wherein the lever (33) is supported such that, on a movement of the coupling section (35), a deflection section (37) of the lever (33) spaced apart from the coupling section (35) carries out a movement which is larger in comparison with the movement of the coupling section (35);
wherein the sensor (41) detects the position of the deflection section (37) of the lever (33) to detect the latch position;
wherein the latch (19) is preloaded against the hoop (17) so that it contacts a contour (25) of the hoop (17);
wherein the contour (25) of the hoop (17) is configured such that, as a consequence of the preload, the latch (19)
- adopts its locked position in the closed position of the hoop (17);
- adopts its unlocked position in positions of the hoop (17) that are between the closed position and the open position of the hoop (17); and
- adopts a securing position differing from the locked position and the unlocked position in the open position of the hoop (17), said securing position preferably being disposed between the locked position and the unlocked position;
and wherein at least the three positions of the deflection section (37) of the lever (33) which correspond to the locked position, to the unlocked position and to the securing position of the latch (19) can be reliably distinguished by means of the sensor (41).

2. A lock in accordance with claim 1,
wherein the lever (33) is pivotably supported about a pivot point (39).

3. A lock in accordance with claim 2,
wherein the pivot point (39) is provided between the coupling section (35) and the deflection section (37).

4. A lock in accordance with at least one of the preceding claims,
wherein the coupling section (35) is provided at a first end of the lever (33) and the deflection section (37) is provided at a second end of the lever (33) opposite the first end.

5. A lock in accordance with at least one of the preceding claims,
wherein the hoop (17) is at least partly arranged within the lock body (13); and wherein the latch (19) and the lever (33) are arranged completely within the lock body (13).

6. A lock in accordance with at least one of the preceding claims,
wherein the deflection section (37) magnetically cooperates with the sensor (41).

7. A lock in accordance with claim 6,
wherein the deflection section (37) has a permanent magnet (43) and the sensor (41) is configured as a magnetic sensor, in particular as a Hall sensor or as a magnetic field sensor; and
wherein the sensor (41) is preferably configured for a three-dimensional magnetic detection.

8. A lock in accordance with claim 6 or claim 7,
wherein the lock comprises an inner housing, preferably an inner housing closed fully around its periphery, which is arranged within the lock body (13), with the sensor (41) being arranged within the inner housing and the lever (33) being arranged outside the inner housing.

9. A lock in accordance with at least one of the preceding claims,
wherein the lever (33) is supported such that it has a single degree of freedom.

10. A lock in accordance with at least one of the preceding claims,
wherein the lock comprises a drive motor (29) for moving the latch (19).

11. A lock in accordance with claim 10,
wherein the lever (33) is aligned substantially in parallel with the drive motor (29).

12. A lock in accordance with at least one of the preceding claims,
wherein the hoop (17) has a first engagement recess (21) into which the latch (19) can engage when the hoop (17) is in the closed position to block the hoop (17) against a departure from the closed position.

13. A lock in accordance with claim 12,
wherein the hoop (17) has a second engagement recess (27) into which the latch (19) can engage when the hoop (17) is in the open position to block the hoop (17) against a departure from the open position.

14. A lock in accordance with claim 13,
wherein the contour (25) of the hoop (17) has the first engagement recess (21) and the second engagement recess (27) so that, as a consequence of the preload, the latch (19)
- engages into the first engagement recess (21) in the closed position of the hoop (17), with the locked position of the latch (19) being defined by the depth of the engagement; and
- engages into the second engagement recess (27) in the open position of the hoop (17), with the securing position of the latch (19) being defined by the depth of the engagement.

## Revendications

1. Antivol (11), en particulier pour un deux-roues, de préférence susceptible d'être entraîné au moins partiellement par voie motrice, comportant
- un corps d'antivol (13)
- un étrier (17) qui est mobile entre une position ouverte et une position fermée,
- un verrou (19) qui est monté sur le corps d'antivol (13) de manière à être mobile entre une position de verrouillage, dans laquelle il bloque l'étrier (17) dans sa position fermée pour l'empêcher de quitter la position fermée, et une position de déverrouillage, dans laquelle il libère l'étrier (17),
- un capteur (41) destiné à détecter la position du verrou, et
- un levier (33) monté de façon mobile,
dans lequel
une portion de couplage (35) du levier (33) est couplée en mouvement au verrou (19),
le levier (33) est monté de telle sorte que, lors d'un mouvement de la portion de couplage (35), une portion de déviation (37) du levier (33) espacée de la portion de couplage (35) effectue un mouvement plus important que le mouvement de la portion de couplage (35),
le capteur (41) destiné à détecter la position du verrou détecte la position de la portion de déviation (37) du levier (33),
le verrou (19) est précontraint contre l'étrier (17), de manière à s'appuyer contre un contour (25) de l'étrier (17),
le contour (25) de l'étrier (17) est réalisé de telle sorte que le verrou (19), sous l'effet de la précontrainte,
- prend sa position de verrouillage, dans la position fermée de l'étrier (17),
- prend sa position de déverrouillage, dans des positions de l'étrier (17) qui se situent entre la position fermée et la position ouverte de l'étrier (17), et
- prend une position de blocage qui est différente de la position de verrouillage et de la position de déverrouillage, dans la position ouverte de l'étrier (17), position de blocage qui se situe de préférence entre la position de verrouillage et la position de déverrouillage, et
le capteur (41) permet de distinguer de façon fiable au moins les trois positions de la portion de déviation (37) du levier (33) qui correspondent à la position de verrouillage, à la position de déverrouillage et à la position de blocage du verrou (19).

2. Antivol selon la revendication 1,
dans lequel le levier (33) est monté de façon mobile en pivotement autour d'un point de rotation (39).

3. Antivol selon la revendication 2,
dans lequel le point de rotation (39) est prévu entre la portion de couplage (35) et la portion de déviation (37).

4. Antivol selon l'une au moins des revendications précédentes,
dans lequel la portion de couplage (35) est prévue à une première extrémité du levier (33), et la portion de déviation (37) est prévue à une seconde extrémité du levier (33) opposée à la première extrémité.

5. Antivol selon l'une au moins des revendications précédentes,
dans lequel l'étrier (17) est disposé au moins partiellement à l'intérieur du corps d'antivol (13), et le verrou (19) et le levier (33) sont disposés complètement à l'intérieur du corps d'antivol (13).

6. Antivol selon l'une au moins des revendications précédentes,
dans lequel la portion de déviation (37) coopère par voie magnétique avec le capteur (41).

7. Antivol selon la revendication 6,
dans lequel la portion de déviation (37) présente un aimant permanent (43), et le capteur (41) est réalisé sous forme de capteur magnétique, en particulier de capteur à effet Hall ou de capteur de champ magnétique, et
le capteur (41) est de préférence réalisé pour une détection magnétique tridimensionnelle.

8. Antivol selon la revendication 6 ou 7,
dans lequel l'antivol comprend un boîtier intérieur, de préférence fermé sur tout le pourtour, disposé à l'intérieur du corps d'antivol (13),
le capteur (41) est disposé à l'intérieur du boîtier intérieur, et le levier (33) est disposé à l'extérieur du boîtier intérieur.

9. Antivol selon l'une au moins des revendications précédentes,
dans lequel le levier (33) est monté de manière à présenter un seul degré de liberté.

10. Antivol selon l'une au moins des revendications précédentes,
dans lequel l'antivol comprend un moteur d'entraînement (29) pour déplacer le verrou (19).

11. Antivol selon la revendication 10,
dans lequel le levier (33) est orienté sensiblement parallèlement au moteur d'entraînement (29).

12. Antivol selon l'une au moins des revendications précédentes,
dans lequel l'étrier (17) présente un premier évidement d'engagement (21) dans lequel le verrou (19) peut s'engager lorsque l'étrier (17) est dans la position fermée, afin de bloquer l'étrier (17) et l'empêcher de quitter la position fermée.

13. Antivol selon la revendication 12,
dans lequel l'étrier (17) présente un second évidement d'engagement (27) dans lequel le verrou (19) peut s'engager lorsque l'étrier (17) est dans la position ouverte, afin de bloquer l'étrier (17) et l'empêcher de quitter la position ouverte.

14. Antivol selon la revendication 13,
dans lequel le contour (25) d'étrier (17) présente le premier évidement d'engagement (21) et le second évidement d'engagement (27), de sorte que le verrou (19), suite à la précontrainte,
- s'engage dans le premier évidement d'engagement (21), dans la position fermée de l'étrier (17), la profondeur d'engagement définissant la position de verrouillage du verrou (19), et
- s'engage dans le second évidement d'engagement (27), dans la position ouverte de l'étrier (17), la profondeur d'engagement définissant la position de blocage du verrou (19).
